# EUROPEAN PATENT SPECIFICATION

(11) **EP 4 548 172 B1**
(45) Date of publication and mention of the grant of the patent: **17.06.2026**
(21) Application number: 23707063.6
(22) Date of filing: 23.02.2023
(51) Int. Cl.: G06F 1/16, H04M 1/02

(54) **A SYSTEM AND A METHOD FOR PROVIDING VARIABLE TENSIONING OF AN EXTENDABLE DISPLAY**
SYSTEM UND VERFAHREN ZUR BEREITSTELLUNG VON VARIABLER SPANNUNG EINER AUSZIEHBAREN ANZEIGE
SYSTÈME ET PROCÉDÉ DE MISE EN TENSION VARIABLE D'UN ÉCRAN EXTENSIBLE

(43) Date of publication of application: 07.05.2025
(73) Proprietor: Huawei Technologies Co., Ltd., Shenzhen, Guangdong 518129 (CN)
(72) Inventor: PELTOLUHTA, Eetu, 80992 Munich (DE); OJANTO, Mika, 80992 Munich (DE)
(74) Representative: Thun, Clemens
(86) International application number: PCT/EP2023/054502
(87) International publication number: WO 2024/175194

(56) References cited:
- WO-A1-2022/050585
- KR-A- 20220 061 789
- US-A1- 2020 033 913
- US-A1- 2022 117 100
- US-A1- 2022 408 573

## Description

### TECHNICAL FIELD

The present disclosure generally relates to the field of extendable displays. In particular, some embodiments of the disclosure relate to tensioning of an extendable display, and in more particular, to providing variable tensioning of the extendable display.

### BACKGROUND

A portable electrical device, such as a mobile phone, may have an extendable display. When the display is extended, a display area on one side of the mobile phone may be increased, for example, by sliding the display open by means of moving parts of the mobile phone and a display module. However, the movement of the display may pose challenges on functioning of at least one of the display or the mobile phone.

US 2020/033913 A1 refers to a display device including: a first roller; a second roller; a gear unit that is coupled to the second roller and configured to rotate with the second roller; a rail unit that is engaged with the gear unit; a housing where the rail unit is provided; and a display panel module of which one end is fixed to the housing and the other end is fixed to the second roller and is configured to be bent by the first roller and then rolled on the second roller, wherein the display panel module is configured to be slide-extended and slide-retracted as the gear unit and the rail unit operate while being engaged with each other.

KR 2022/0061789 A refers to an electronic device including: a housing; a flexible display at least partially took off from an internal space of the housing; and a rotary module for moving the flexible display. The rotary module includes: a shaft including one end and the other end combined with a support member included in the electronic device; a cylindrical housing operatively connected with the flexible display, and rotatable around the shaft; one pair of cylindrical cams penetrated by the shaft to be housed in the cylindrical housing, linearly movable on the shaft, and located to be symmetrical to each other with respect to the center of the shaft; one pair of guide pins combined with the cylindrical housing, formed on a cylindrical surface of each of the pair of cylindrical cams, and matched with one pair of guide grooves, which are symmetrical to each other with respect to the center of the shaft, respectively; and one pair of springs housed in the cylindrical housing, elastically supporting each of the pair of cylindrical cams, and symmetrical to each other with respect to the center of the shaft.

WO 2022/050585 A1 refers to an electronic device may including: a base bracket including a first surface and a second surface opposite to the first surface, and at least one first roller and at least one second roller which are respectively rotatably arranged at opposite ends thereof; a slide bracket corresponding to the first surface and slidably coupled to the base bracket; a bendable member connected to an end of the slide bracket and arranged to be at least partially slid in the inner space through a sliding operation of the slide bracket; a flexible display including a first area fixed to the slide bracket and a second area extending from the first area and fixed to the bendable member; a tension belt wound around the at least one second roller to be at least partially supported thereby and having one end fixed to the slide bracket and the other end fixed to the bendable member; and a first elastic member which allows the tension belt and the bendable member to be connected to have a tensile force to pull each other.

US 2022/117100 A1 refers to an electronic device including a housing, a plate capable of being slid out from the housing, a flexible display including a first area disposed on one surface of the plate, and a second area extending from the first area and at least partially drawn out from an inner space of the housing when the plate is slid out, a curved member positioned in an inner space of the housing to correspond to the second area, a first linear gear positioned on another surface of the plate, and including a plurality of gear teeth arranged in a first direction in which the plate is slid out, a second linear gear including a plurality of gear teeth arranged in the first direction, and a circular gear capable of being rotated about a rotation shaft perpendicular to the first direction, and disposed between the first linear gear and the second linear gear to be spaced apart from the curved member in a second direction opposite to the first direction, the circular gear being engaged with the first linear gear and the second linear gear.

US 2022/408573 A1 refers to a mobile terminal comprising: a first frame; a second frame which is coupled so as to be movable in a first direction from the first frame, and comprises a third rear unit moving along the back surface of the first frame, and a first roller provided on the end part in the first direction of the third rear unit; a flexible display unit which has one end thereof fixed to the front surface of the first frame, and is provided so as to cover the first roller; a drive unit which moves the second frame in the first direction or moves same in a second direction which is the opposite direction from the first direction; and a connection band which covers the end part in the second direction of the third rear unit, has one end thereof connected to the end part in the first direction of the first frame, and has the other end thereof connected to the other end of the flexible display unit.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective of the present disclosure to provide an improvement on tensioning of an extendable display. The embodiments of the disclosure may provide variable force tensioning of an extendable display, such as a flexible display for a device with sliding and rollable extending display construction. With variable force tensioning, less radial pressure by the tensioned display may occur, and less power may be needed to open the device and extend the display. The foregoing and other objectives may be achieved by the features of the independent claims. Further implementation forms are apparent from the dependent claims, the description, and the drawings.

According to a first aspect, a variable display tensioner system for a portable electrical device with an extendable display is provided. The variable display tensioner system may comprise a gear arrangement comprising at least one circular gear configured to at least one of cause the extendable display to move between an open and a closed position based on rotation of the circular gear or rotate based on the movement of the extendable display between the open and the closed position; a wire connection element configured to be coupled with a wire configured to tension the extendable display; and a cam configured to rotate when the at least one circular gear rotates, and wherein the rotation of the cam is configured to cause linear movement of the wire connection element along a same axis as an opening direction of the extendable display based on a profile of the cam. This solution enables tension of the extendable display to vary with the movement of the extendable display. The variability in tension may reduce friction around a bend area of the extendable display. Hence, less radial pressure may be caused by the tensioned extendable display, and the extendable display may glide easier over the bend area. Further, an amount of power needed to extend the display may be reduced.

According to an implementation form of the first aspect, the at least one circular gear is configured to cause linear movement of a first frame of the portable electrical device in relation to a second frame of the portable electrical device based on the rotation of the circular gear or to rotate based on the linear movement of the first frame, wherein the linear movement of the first frame is configured to cause the movement of the extendable display between the open and the closed direction; and wherein the wire connection element is configured to be movably coupled with the second frame; and the gear arrangement and the cam are configured to be fixedly coupled with the second frame. This enables that the tension may vary according to a linear movement of a movable frame of the portable electrical device configured to cause the extendable display to extend. The variable display tensioner system may be coupled with a fixed frame of the portable electrical device.

According to an implementation form of the first aspect, the variable display tensioner system may further comprise at least one linear gear configured to be coupled with the first frame and configured to engage with the circular gear. Hence, variability in tension may be implemented with a simple mechanical rack-and-pinion linkage between the first frame and the wire connection element.

According to an implementation form of the first aspect, the cam is configured to rotate substantially a full rotation around its pivot axis when the extendable display moves from the closed position to the open position. This may enable varying tensioning of the extendable display between the closed and open position nonlinearly, wherein an increase and a decrease in the tension depends on a profile of the cam.

According to an implementation form of the first aspect, the cam may be configured to push the wire connection element towards the opening direction of the extendable display when the extendable display is substantially in the open position or in the closed position and to cause the wire connection element to move towards a closing direction of the extendable display when the extendable display is substantially positioned between the open and the closed position based on the profile of the cam. This enables varying tensioning of the extendable display between the closed and open position nonlinearly, wherein an increase and a decrease in tension depends on a profile of the cam.

According to an implementation form of the first aspect, the cam has a symmetrical profile having a nose and a heel. This enables varying tensioning of the extendable display between the closed and open position nonlinearly, wherein an increase and a decrease in tension depends on a profile of the cam.

According to an implementation form of the first aspect, the wire connection element comprises at least one spring configured to push the wire connection element to be in contact with the cam. This may enable making the gear arrangement more practical to implement. Adding spring(s) to the wire connection element may increase the distance the wire connection element moves.

According to an implementation form of the first aspect, the at least one circular gear and the cam are coupled to a same axis. This may enable a simple mechanical arrangement for providing variable tensioning of the extendable display.

According to an implementation form of the first aspect, the gear arrangement comprises a first circular gear configured to rotate based on the movement of the extendable display or to cause the movement of the extendable display based on rotation of the first circular gear; a second circular gear configured to rotate simultaneously with the first circular gear on a same axis; a third circular gear engaging with the second circular gear on a parallel axis and configured to rotate to an opposite direction at a reduced speed compared to the first circular gear based on the rotation of the second circular gear; and wherein the cam is coupled with the third circular gear via a gear shaft and configured to rotate at the reduced rotation speed based on the rotation of the third circular gear. Hence, the variable display tensioner system may comprise a gear reduction linkage, which may facilitate implementation of the variable display tensioner system according to desired travel distances of the first frame and the wire connection element and/or a desired tension force curve. Further, the variable display tensioner may be manufactured with smaller sized gears and/or a greater travel distance may be allowed compared to an implementation where the cam and the first circular gear are on a same axis.

According to an implementation form of the first aspect, the variable display tensioner system may further comprise a motor configured to cause rotation of the at least one circular gear. This enables that the extendable display may be moved with a motor. Further, less friction during opening and/or closing the extendable display may result in more efficient motor operation.

According to an implementation form of the first aspect, the motor may be configured to be fixed to the second frame linearly to an opening direction of the extendable display; and the variable display tensioner system further comprises: a lead screw configured to be rotated by the motor; a nut configured to be coupled with the second frame and to move linearly along the lead screw based on rotation of the lead screw, wherein movement of the nut is configured to cause linear movement of a first frame of the portable electrical device relative to a second frame of the portable electrical device to move the extendable display between the open and the closed position. This enables that the extendable display may be moved with a motor. Further, less friction during opening and/or closing the extendable display may result in more efficient motor operation.

According to an implementation form of the first aspect, the variable display tensioner system comprises the wire, and wherein the wire is configured to be coupled with a movable end of the extendable display. The wire enables providing the variable tensioning to the extendable display.

According to an implementation form of the first aspect, the variable display tensioner system may further comprise a pulley configured to be coupled with the first frame and to tension the wire between the wire connection element and a movable end of the extendable display. The pulley enables tensioning of the wire between the wire connection element and the extendable display.

According to a second aspect, a portable electrical device is provided. The portable electrical device may comprise an extendable display; and one or more variable display tensioner systems according to the first aspect. This solution enables providing variable tensioning of the extendable display. The variability in tension may reduce friction around a bend area of the extendable display. Hence, less radial pressure may be caused by the tensioned extendable display, and the extendable display may glide easier over the bend area. Further, opening of the portable electrical device to extend the display may be facilitated as less power may be needed to open the device.

In an implementation form of the second aspect, the portable electrical device may further comprise a first frame and a second frame, wherein the first frame is configured to linearly move relative to a second frame along an opening direction of an extendable display and cause movement of the extendable display between an open and a closed position; and wherein the at least one variable tensioner system is configured to cause tensioning of the extendable display to vary between the open and the closed positions based on movement of the first frame. This may enable that the tensioning may be varied based on movement of the first frame to reduce friction and radial pressure by the extendable display at least on a bend area of the extendable display.

In an implementation form of the second aspect, the portable electrical device may comprise a plurality of variable display tensioner systems positioned symmetrically in relation to an opening direction of the extendable display. This may enable that the variable tensioning may be applied symmetrically on the extendable display.

According to a third aspect, a method for providing variable tensioning of an extendable display of a portable electrical device is provided. The method may comprise causing at least one circular gear to rotate, the rotation of the circular gear being associated to movement of the extendable display between an open and a closed position; causing a cam to rotate based on the rotation of the at least one circular gear; and causing a wire connection element coupled with a wire configured to tension the extendable display to linearly move along a same axis as an opening direction of the extendable display based on the rotation and a profile of the cam. This solution may enable providing variable tensioning of an extendable display. Hence, less friction and radial pressure may be caused by the movement of the extendable display.

Implementation forms of the present disclosure can thus provide a system, a portable electrical device and a method enabling variable tensioning of an extendable display. These and other aspects of the present disclosure will be apparent from the example embodiment(s) described below.

### DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a portable electrical device with an extendable display and a variable display tensioner system in a closed position, according to an embodiment of the disclosure;
FIG. 2 illustrates an example of a partial view of a portable electrical device with a variable display tensioner system in a closed position, according to an embodiment of the disclosure;
FIG. 3 illustrates an example of a portable electrical device with an extendable display and a variable display tensioner system in a partially open position, according to an embodiment of the disclosure;
FIG. 4 illustrates an example of a partial view of a portable electrical device with a variable display tensioner system in a partially open position, according to an embodiment of the disclosure;
FIG. 5 illustrates an example of a portable electrical device with an extendable display and a variable display tensioner system in an open position, according to an embodiment of the disclosure;
FIG. 6 illustrates an example of a partial view of a portable electrical device with a variable display tensioner system in an open position, according to an embodiment of the disclosure;
FIG. 7 illustrates an example of a gear arrangement of a variable display tensioner system, according to an embodiment of the disclosure;
FIG. 8 illustrates an example of a motor configured to cause a gear arrangement of a variable display tensioner system to rotate, according to an embodiment of the disclosure;
FIG. 9 illustrates an example of a variable display tensioner system and a display module in a closed position, according to an embodiment of the disclosure;
FIG. 10 illustrates an example of a variable display tensioner system and a display module in a half open position, according to an embodiment of the disclosure;
FIG. 11 illustrates an example graph of variable tension provided by a variable display tensioner system, according to an embodiment of the disclosure; and
FIG. 12 illustrates an example of a method for providing variable tensioning of an extendable display of a portable electrical device, according to an embodiment of the disclosure.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present embodiments and is not intended to represent the only forms in which the present examples may be constructed or utilized. The description sets forth the functions of the examples and the sequence of operations for constructing and operating the examples. However, the same or equivalent functions and sequences may be accomplished by different examples.

An extending display by means of rolling may have one end fixedly attached to a fixed frame of a device and another end non-fixedly attached on another side of the device on a moving frame. Different embodiments exist, but the two frames may be configured to extend away from each other, thus extending a display area on one side of the device while decreasing on the other side of the device, i.e., the display ends move in opposite directions. The display may made from a flexible material and configured to bend between the fixed and the moving frame.

A flexible display which is forced around a bend has a tendency to form a bump around the bend area as the display resists the bending action. Therefore, the display should be tensioned to keep the display as flat as possible. However, high display tension tends to increase sliding friction of the display, especially in the bend area, as the tensioned display may create a high radial load. The friction could be reduced by using a roller with ball bearings, but in practice, the tension has to be so high that the radial load to the bearings may be larger than allowed.

One approach is to tension the display with a wire. One end of the wire may be indirectly connected to the fixed display end by sharing a same fixed frame of a device. The other end of the wire may be directly connected to a moving end of the display. The wire may perform a loop around a pulley wheel which is fixedly connected to a moving frame of the device. The connection points of the wire may be kept fixed, and a length of the wire constant, but the wire may be enabled to be under tension when the display is extended. Therefore, the wire length may determine a constant display tension.

An objective of an example embodiment is to provide variable tensioning of an extendable display. According to an embodiment, a variable display tensioner system may comprise a gear arrangement comprising at least one circular gear configured to at least one of cause the extendable display to move between an open and a closed position based on rotation of the circular gear or to rotate based on the movement of the extendable display between the open and the closed position; a wire connection element configured to be coupled with a wire configured to tension the extendable display; and a cam configured to rotate when the at least one circular gear rotates, and wherein the rotation of the cam is configured to cause linear movement of the wire connection element along a same axis as an opening direction of the extendable display based on a profile of the cam.

Hence, the variable display tensioner system may allow the wire connection to move along the opening direction. This variability in tension may reduce friction around the display bend, and thus less power may be needed to open the portable electrical device. By having the display tension change during opening/closing operation, the extendable display may glide easier over the bend area, as there is less radial pressure by the tensioned extendable display.

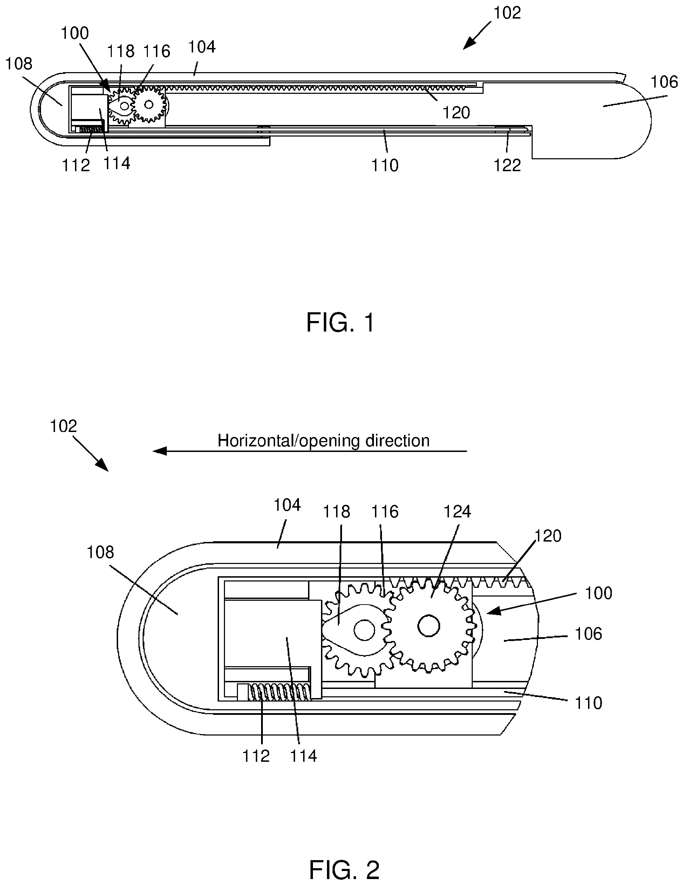

FIG. 1 illustrates an example of a portable electrical device with an extendable display and a variable display tensioner system in a closed position, according to an embodiment of the disclosure.

The portable electrical device 102 may be, for example, user equipment such as a mobile phone, a television, a laptop, or the like. The portable electrical device 102 may comprise at least one extendable display 104. The extendable display may comprise a sliding and a rollable extending display construction. For example, the extendable display may be configured to slide from one end when a movable frame 108 of the portable electrical device 102 slides towards an open or a closed position. The extendable display 104 may be configured to bend over a rounded edge of the movable frame 108, wherein part of display area is located on one side of the bend and part of the display area is located on another side of the bend. The extendable display 104 may be further configured to roll over the bend on top of the movable frame 108 to increase the display area on the one side and to decrease on the other side. A first end of the extendable display may be coupled to the movable frame 108 and a second end of the extendable display may be coupled to a fixed frame 106 of the portable electrical device. The movable frame 108 may be configured to move linearly in relation to the fixed frame 106. Hence, an area of the extendable display 104 on top of the movable frame 108 may increase when the movable frame 108 slides open and an area of the extendable display 104 on the other side of the movable frame 108 may decrease, respectively. The movable frame 108 may be also referred to as a first frame and the fixed frame 106 may be referred to as a second frame. The first end of the extendable display 104 may be a movable end of the extendable display configured to slide with movement of the movable frame 108 and the second end may be a fixed end of the extendable display 104.

Although subjects may be referred to as 'first' or 'second' subjects, this does not necessarily indicate any order or importance of the subjects. Instead, such attributes may be used solely for the purpose of making a difference between subjects.

The extendable display 104 may be tensioned with one or more wires 110. One end of the wire 110 may be indirectly connected to the fixed end of the extendable display 104 by sharing a same fixed body, i.e., the fixed frame 106. The other end of the wire 110 may be directly connected to the movable end of the display 104. The wire 110 may be configured to perform a loop around a pulley 122. The pulley 122 may be fixedly coupled with the movable frame 108. The pulley 122 may be configured to tension the wire 110 between a wire connection element 114 and the movable end of the extendable display 104.

The portable electrical device 102 may further comprise at least one variable display tensioner system 100. In an implementation form, the portable electrical device 102 may comprise at least two variable display tensioner systems 100. The variable display tensioner systems 100 may be symmetrically positioned in the portable electrical device 102 in relation to an opening direction of the extendable display 102. For example, the variable display tensioner systems 100 may be positioned on both sides of the portable electrical device 102.

The variable display tensioner system 100 may comprise the wire connection element 114. The wire connection element may be configured to be movably coupled to the fixed frame 106. For example, the fixed frame 106 may comprise a rail along which rail the wire connection element 114 may linearly move. However, rail is only one example, and movement of the wire connection element 114 may be implemented for example, with means for sequential compression and extension configured to change a position of the wire connection element 114. In an embodiment, the wire connection block may be integrated into the fixed frame. The wire connection element 114 may be configured to be coupled with the wire 110 configured to tension the extendable display 104. Position of the wire connection element 114 may be constrained to move linearly along a movement direction of the movable frame 108 and the extendable display 104. In other words, movement of the wire connection element 114 may be constrained to be along a same axis as a sliding action of the portable electrical device 102. For example, the movable frame 108 of the portable electrical device 102 may be configured to slide open or closed along a horizontal direction depicted in FIG. 2. When the portable electrical device 102 is operated to slide towards an open position, the movable frame 108 may be configured to move at least partially away from the fixed frame 106. When the portable electrical device 102 is operated to slide to a closed position, the fixed and the movable frame 106, 108 may be configured to move to a substantially overlapping positions.

The variable display tensioner system 100 may comprise a gear arrangement 116. The gear arrangement 116 may comprise at least one circular gear 124. The circular gear 124 may be configured to at least one of cause the extendable display 104 to move between the open and closed positions based on rotation of the circular gear 124 or to rotate based on the movement of the extendable display 104 between the open and the closed position. The gear arrangement 116 may be fixedly coupled to the fixed frame 106. The gear arrangement 116 may comprise, for example, a mechanical rack-and-pinion reduction linkage build between the cam 118 and the moving frame 108. For example, the gear arrangement 118 may comprise a linear gear 120 configured to be coupled with the movable frame 108 and configured to engage with the circular gear 124. Hence, rotation of the circular gear 124 may be configured to cause linear movement of the linear gear 120, and vice versa.

The variable display tensioner system 100 may comprise a cam 118. The cam 118 may be configured to rotate when the at least one circular gear 124 rotates. The cam 118 may be configured to rotate substantially a full rotation around its pivot axis when the extendable display 104 moves from the closed position to the open position. As the cam 118 rotates, it may be configured to cause the wire connection element 114 to translate in linear direction, thus changing a tension of the wire 110. The change in tension of the wire 110 may depend on a profile of the cam 118. By having a cam profile to provide the wire connection element translation, a tension profile of the extendable display 104 can be customized. For example, the cam 118 may have a symmetrical profile having a nose and a heel. Hence, the tension profile may not have to be linearly increasing, but it may for example increase when the portable electrical device 102 is opened from the closed position towards a half open position, and then decrease when moved from the half open position towards a fully open position. This may enable that the extendable display 104 may glide easier over the bend when extended as the tension is reduced during the movement of the extendable display 104.

The wire connection element 114 may be, for example, spring loaded and comprise at least one spring 112. The spring 112 may be configured to push the wire connection element 114 to be in contact with the cam 118. When the extendable display 104 is in the closed position, the cam 118 may be configured to push the wire connection element 114 away from the pulley 122 and cause tension of the wire 110 to increase. The wire 110 may be further configured to pull the extendable display 104 flat against the movable frame 108 at least at the bend area of the extendable display 104. The spring 112 may be configured to be in a compressed stage in the closed position. The spring 112 may be located, for example, inside the wire connection element, or at a side of the wire connection element 114. In an implementation form, the spring 112 may be a leaf spring or a disc spring coupled to an opposite side of the wire connection element 114 in relation to the cam 118.

Alternatively, the wire connection element 114 may be made from an elastic material. For example, when the nose of the cam is pushing the wire connection element 114, the spring and/or the wire connection element itself may be compressed. When the cam 118 rotates and the heel of the cam 118 is facing the wire connection element 114, the spring and/or the wire connection element 118 may be allowed to stretch from the compressed stage, and hence, a connection point of the wire 110 moves towards the cam 118 and the pulley 122. Adding spring(s) to a variable display tensioner system 100, or using other means such as the elastic material in the wire connection element 114, may increase the distance the wire connection element 114 and the wire moves 112. This may enable making gear reduction more practical to implement. The cam profile may dictate what is the correlation between the opening position and the tension of the extendable display 104.

In an implementation form, the circular gear 124 and the cam 118 may be coupled on a same axis. In one implementation form, the gear arrangement 116 comprises a plurality of circular gears, and wherein the circular gear 124 and the cam 118 are arranged on parallel axes. Further, the plurality of circular gears may be configured to rotate the cam 118 at a reduced speed relative to a rotational speed of the circular gear 124. Hence, parameters of the circular gears and their arrangement may be selected based on a distance the movable frame is configured to move such that the cam 118 is configured to rotate a full spin when the movable frame moves between the open and closed positions. When the cam 118 and the circular gear 124 are coupled on the same axis, the movable frame 108 may be allowed to travel a shorter distance compared to the case where gear speed reduction is used for the full spin, or a larger circular gear 124 may be needed. Hence, the implementation with gear speed reduction may enable use of the variable display tensioner system is smaller devices and with wider movement of the movable frame. On the other hand, the implementation where the cam 118 and the circular gear 124 are located on the same axis may provide a simpler design.

FIG. 2 illustrates an example of a partial view of the portable electrical device 102 with the variable display tensioner system 100 in a closed position, according to an embodiment of the disclosure. In FIG. 2, a close-up view of the variable tensioning system 100 coupled with the fixed frame 106 of the portable electrical device 102 in FIG. 1 is shown.

During opening of the portable electrical device 102, from the closed position towards an open position, the circular gear 124 may be configured to rotate to a first direction, such as to a counterclockwise direction, and to push the movable frame 108 to open in the horizontal direction. Travel of the movable frame 108 may be configured to push the extendable display 104 open and to glide over the rounded edge of the movable frame 108. For example, during the opening sequence, the gear arrangement 116 between the movable frame 108 and the cam 118 may be configured to rotate the cam 118 in a second direction, such as a clockwise direction. The gear arrangement may comprise a rack-and-pinion reduction linkage comprising at least the linear gear 120 and the circular gear 124. Rotation of the cam 118 may be configured to move the wire connection element 114 according to the profile of the cam 118. In the closed position, the cam 118 may be configured to push the wire connection element 114 further from the cam 118 and cause the spring 112 to compress. When the cam 118 rotates during the opening sequence, and the cam 118 no longer pushes the wire connection element 114, the spring 112 may become less compressed, thus pushing the wire connection element 114 towards the cam 118. The movement of the wire connection element 114 may cause tightening and/or loosening the wire 110 during the rotation.

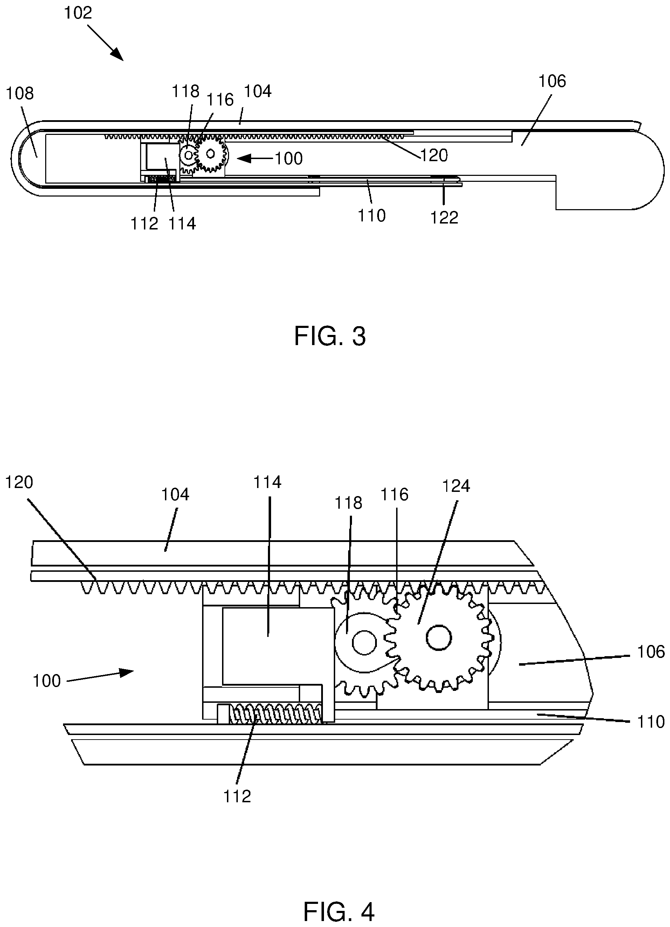

FIG. 3 illustrates an example of the portable electrical device 102 with the extendable display 104 and the variable display tensioner system 100 in a partially open position, according to an embodiment of the disclosure. For example, the extendable display 104 and the movable frame 108 may have moved from the closed position of FIG. 1 to a half-open position.

For example, the movable frame 108 may have linearly moved away from the fixed frame 106 towards a horizontal (opening) direction. For example, the circular gear 124 may have been caused to rotate, and rotation of the circular gear 124 may have caused the linear gear 120 coupled with the movable frame 108 to move in the horizontal direction, thus also moving the movable frame 108. The movable frame 108 may be further configured to push the extendable display 104 from the bend are. When the extendable display 104 is pushed from the bend, the movable end of the extendable display 104 may be caused to move while the other end is fixed to the fixed frame 106, thus causing the display to roll over the bend for extension.

Position of the wire connection element 114 may be constrained to move linearly along the sliding direction of the movable frame 108. As the cam 118 rotates, the cam 118 may be configured to translate the spring-loaded wire connection element 114 in linear direction thus changing the tension of the wire 110. Change in tension of the wire 110 may depend on a profile of the cam 118. In FIG. 3, the cam 118 is rotated approximately a half spin compared to FIG. 1, and a surface of the cam 118 may be contacting the wire connection element 114 closer a pivot axis of the cam 118. Hence, the wire connection element 114 may be allowed to move linearly closer to the pulley 122 and thus the tension of wire 110 is caused to decrease. For example, the spring 112 may be configured to be less compressed when the cam 118 has rotated such that the nose of the cam 118 is turned away from the wire connection element 114 and to push the wire connection element 114 to be in contact with the surface of the cam 118. The surface of the cam 118 contacting the wire connection element 114 may now comprise the heel of the cam 118 having a shorter distance to the pivot axis of the cam 118 compared to the surface of the nose of the cam 118.

FIG. 4 illustrates an example of a partial view of the portable electrical device 102 with the variable display tensioner system 100 in the partially open position, according to an embodiment of the disclosure. FIG. 4 shows a close-up view of the variable display tensioner system 100 in the half-open position described in FIG. 3.

In FIG. 4, an example engagement between the linear gear 120 and the circular gear 124 is shown, wherein teeth of the linear gear mesh with teeth of the circular gear 124. Hence, a rotational motion of the circular gear 124 may be converted into linear motion of the linear gear 120. For example, rotation of the circular gear 124 in a first direction, e.g., the opening direction, may cause the movable frame 108 coupled with the linear gear 120 to rotate away from the fixed frame 106 such that a total length of the movable and the fixed frame may increase. Further, rotation of the circular gear 124 to a second direction, e.g., a closing direction, may cause the movable frame 108 to move towards the fixed frame 106 such that the total length may decrease.

The gear arrangement 116 and the cam profile may be designed such that when the movable frame 108 has moved approximately half-way towards the open position, the cam 118 has turned such that it is no longer pushing the wire connection element 114 away from the pulley 122. For example, the gear arrangement 116 may be configured to turn the cam 118 such that a nose of the cam 118 is facing away from the wire connection element 114. When the cam 118 is no longer pushing the wire connection element 114, the spring 112 may cause the wire connection element 114 to linearly move in an opposite direction than the movement direction of the movable frame 108. The spring may be configured to be in a less compressed stage in the partially open position compared to the closed position, thus allowing the wire connection element to move at least by the length increase of the spring 112. When the wire connection element 114 comprises an elastic material instead of the spring, a length of wire connection element 114 may increase when the cam 118 no longer compresses the wire connection element 114. Hence, the wire 110 may be allowed to be less tensioned as a connection point of the wire 110 with the wire connection element 114 moves with the changes in length or position of the wire connection element 114.

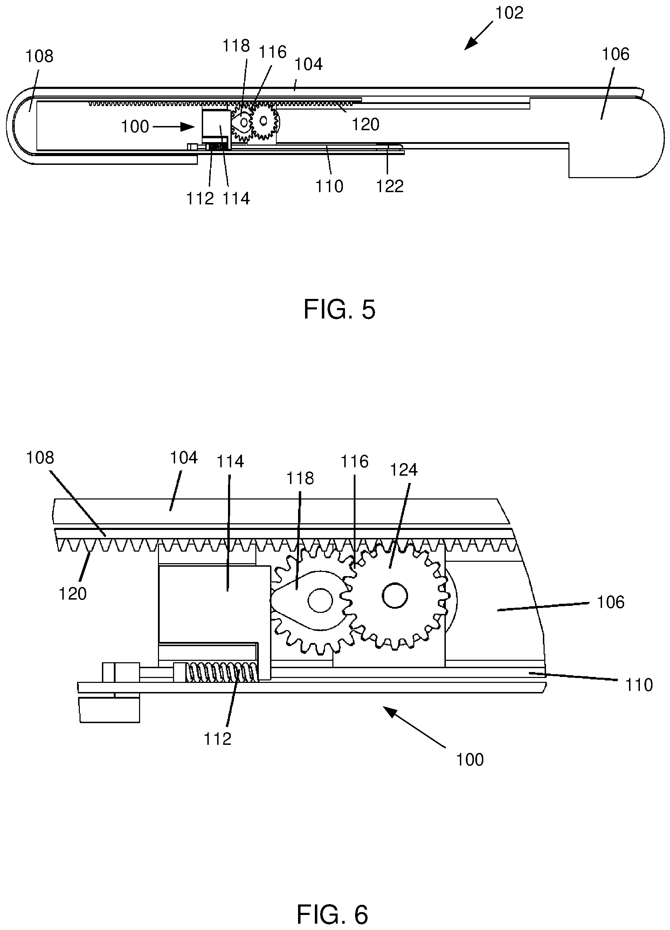

FIG. 5 illustrates an example of the portable electrical device 102 with the extendable display 104 and the variable display tensioner system 100 in an open position, according to an embodiment of the disclosure. In FIG. 5, the portable electrical device 102 may have moved from the partially open position of FIG. 3 to a fully open position. Hence, the circular gear 124 may have continued rotation to the first direction and caused the movable frame 108 to move further from the fixed frame 106 based on the movement of the linear gear 120.

When the extendable display 104 and, respectively, the movable frame 108 are moved from the partially open position to the open position, the cam 118 may be configured by the gear arrangement 116 to push the wire connection element 114 away from the pulley 122. This may cause the tension of the wire 110 to increase. During the rotation of the cam 118 from the partially open position to the open position, the distance between the surface of the cam 118 touching the wire connection element 114 and the pivot axis of the cam 118 may increase. Consequently, the distance between the pulley 122 and the wire connection element 114 increases as well as the tension of the wire 110 pulled by the wire connection element 114. The wire 110 may be further configured to pull the extendable display 104 flat against the movable frame 108 at the rounded edge area where the extendable display 104 bends. In the open position, the spring 112 may be configured to be in a compressed stage. For example, the nose of the cam 118 may be configured to push the wire connection element 114 in the open position, which causes the spring 112 to compress. In the open position and in the closed position, the spring 112 may be more compressed than in the partially open position.

FIG. 6 illustrates an example of a partial view of the portable electrical device 102 with the variable display tensioner system 100 in the open position, according to an embodiment of the disclosure. FIG. 6 shows a close-up view of the variable display tensioner system 100 in the portable electrical device 102 when in the open position as described in FIG. 5.

As described, the linear gear 120 engaging with the circular gear 124 may have caused the movable frame 108 to move linearly at least partially apart from the fixed frame 106. The variable display tensioner system 100 may be configured to vary tensioning of the extendable display 104 during the movement of the movable frame 108 by letting the wire connection element 114 coupled with the fixed frame 106 to move.

For example, during movement of the movable frame 108 to the open position, the circular gear 124 of the gear arrangement 116 may have caused the cam 118 to rotate such that the nose of the cam 118 is pushing the wire connection element 114 to its initial position during the closed position. In response, the end of the wire 110 coupled with the wire connection element 114 may be caused to move to the same direction as the movable frame 108, which causes tension of the extendable display 104 to increase. Hence, the tension may be decreased during movement of the extendable display between the open and closed positions to ease the opening operation with reduced friction and radial pressure on the bend area.

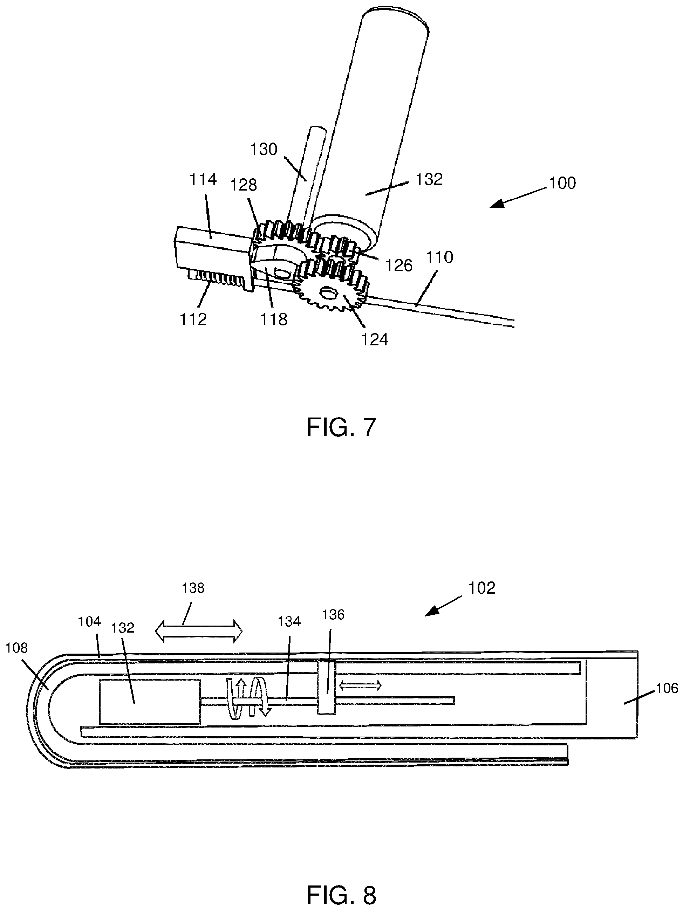

FIG. 7 illustrates an example of a gear arrangement of a variable display tensioner system 100, according to an embodiment of the disclosure. The variable display tensioner system 100 may be implemented in a portable electrical device, such as the portable electrical device 102.

For example, the gear arrangement may comprise a rack-and-pinion reduction linkage between the movable frame of the portable electrical device and a cam 118. The gear arrangement may comprise at least a circular gear 124. The circular gear 124 may be referred to as a first circular gear. Rotation of the first circular gear 124 may be associated to the linear movement of the movable frame 108.

The gear arrangement may further comprise a second circular gear 126. The first and the second circular gears 124, 126 may be coupled on a same axis. The movable frame may comprise a linear gear. Alternatively, the gear arrangement may comprise the linear gear configured to be coupled with the movable frame. The first circular gear 124 may be configured to engage with the linear gear. Hence, linear movement of the movable frame, and respectively linear movement of the linear gear, may cause the first circular gear 124 to rotate. Similarly, rotation of the first circular gear 124 may cause the linear gear, and respectively the movable frame, to move in a linear direction. Further, rotation of the first circular gear 124 may be configured to cause the second circular gear 126 to rotate. The first and the second circular gear 124, 126 may rotate along a same gear shaft.

The second circular gear 126 may be configured to rotate a third circular gear 128 when the second circular 126 gear rotates. The third circular gear 128 may engage with the second circular gear 126 on a parallel axis. The third circular gear 128 may be configured to rotate to an opposite direction at a reduced speed compared to the first circular gear 124. The speed reduction may be implemented by selecting appropriate parameters for the circular gears. For example, the first and the third circular gears 124, 128 may be larger than the second circular gear 126. In an embodiment, the gear arrangement may also comprise more or less than the three circular gear 124, 126, 128, wherein the sizes, positions, engagement and/or gear tooth design is selected such that the cam 118 is configured to rotate substantially a full circle between the open and close positions. The third circular gear 128 may be coupled with a gear shaft 130, wherein the gear shaft 130 is configured to rotate with the third circular gear 128. The gear shaft of the first and second circular gear 124, 126, and the gear shaft 130 of the third circular gear 128 and the cam 118 may be located at parallel axes. The cam 118 may be configured to rotate along the gear shaft 130. Rotation of the cam 118 is configured to move a wire connection element 114 linearly. The wire connection element 114 may be spring (112) loaded, wherein the spring may be configured to push the wire connection element 114 to be in contact with a surface of the cam 118 in any rotational position of the cam 118. The wire connection element 114 may be constrained to move inside a fixed frame of the portable electrical device. The wire connection element 114 may be configured to move along a sliding direction of the extendable display. Movement of the wire connection element 114 may cause variable tensioning of a wire 110 coupled with the wire connection element 114. One end of the wire 110 is coupled with the wire connection element 114 and another end of the wire 110 with the extendable display. Hence, increased tension of the wire 110 may cause the tension of the extendable display to increase, and decreased tension of the wire 110 may cause the tension of the extendable display to decrease.

The variable display tensioner system 100 may further comprise a motor 132. The motor 132 may be, for example, a micro motor. The motor 132 may be configured to rotate the first circular gear 124 and the second circular gear 126, for example, by causing the gear shaft shared by the first and the second circular gear 124, 126 to rotate. The motor-initiated rotation of the first circular gear 124 may cause the movable frame to move due to the engagement of the first circular gear 124 with the linear gear. Hence, the first circular gear 124 may be configured to move the extendable display between the open and closed positions by causing the linear movement of the movable frame. The motor 132 may be coupled with the fixed frame. For example, the motor 132 may be glued or fixed with screws to the fixed frame. The motor 132 may be positioned perpendicularly in relation to the gear arrangement. In other words, when the wire connection element 114 is configured to move along a horizontal direction, the motor 132 may be configured in a vertical direction. The gear shaft 130 may be attached to the fixed frame.

FIG. 8 illustrates an example of a motor 142 configured to cause a gear arrangement of a variable display tensioner system to rotate, according to an embodiment of the disclosure. The variable display tensioner system may be, for example, the variable tensioner system 100 comprising the gear arrangement 116 (not shown).

The motor 132 may be positioned linearly to an opening direction of an extendable display 104 of a portable electrical device 102. The extendable display 104 may be configured to extend when a movable frame 108 of the portable electrical device 102 slides at least partially away from a fixed frame 106 of the portable electrical device 102 in the opening direction. The movable frame 108 may be configured to move along a horizontal direction 138 towards the opening (right) and a closing (left) direction, for example.

The variable display tensioner system may comprise a lead screw 134 configured to be rotated by the motor 132. The variable display tensioner system may further comprise a nut 136 configured to be coupled with the movable frame 108. The nut 136 may be configured to move linearly along the lead screw 134 based on rotation of the lead screw 134. The linear movement of the nut 136 may be configured to cause linear movement of the movable frame 108 relative to the fixed frame 106. Further, the linear movement of the second frame 108 may cause a circular gear of the variable display tensioner system to rotate via engagement with a linear gear coupled with the movable frame 108. Further elements and functioning of the variable display tensioner system 100 may correspond to one or more examples given in this disclosure.

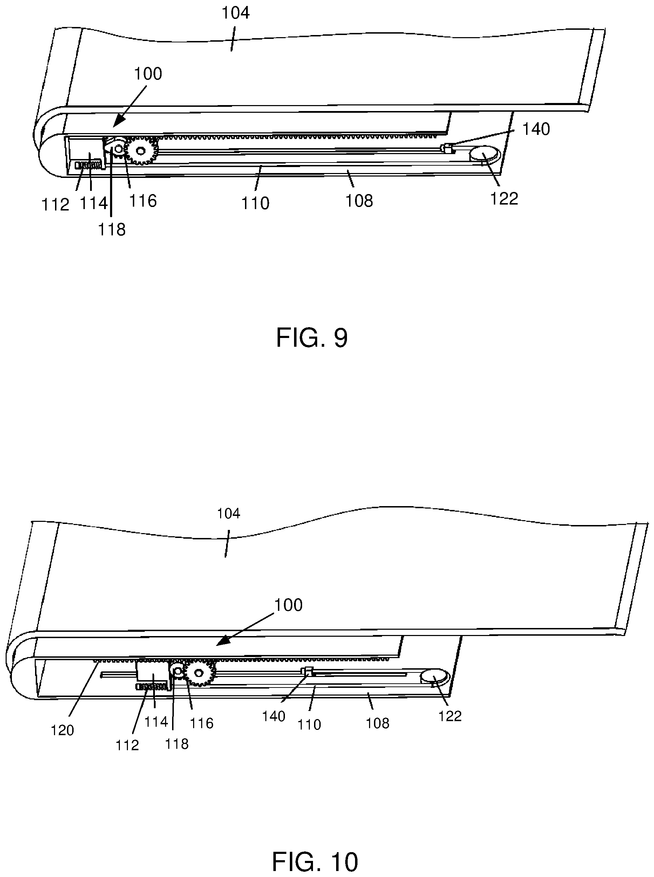

FIG. 9 illustrates an example of a variable display tensioner system 100 and a display module in a closed position, according to an embodiment of the disclosure.

The display module may comprise a flexible display 104 configured to extend based on movement of a movable frame 108. The display module may further comprise a wire 110 configured to tension the extendable display 104. The variable display tensioner system 100 may comprise at least a wire connection element 114, a cam 118 and a gear arrangement 116. The wire 110 may be tensioned around a pulley 122 between the wire connection element 114 and a movable end 140 of the display module. For example, the display module may comprise a connection element for the wire 110. One end of the wire 100 may be coupled with the connection element of the display module and another end of the wire 110 may be coupled with the wire connection element 114 of the variable display tensioner system 100. The wire 110 may locate inside the movable frame 108 and the extendable display 104 may locate outside the movable frame 110. The movable frame 110 may comprise a hole through which the connection element of the extendable display 104 emerges and enables the connection element to move linearly with movement of the extendable display 104. In the closed position, the movable end 140 of the extendable display may be located close to the pulley 122 configured for tensioning the wire 110. The wire connection element 114 may be pushed by a nose of the cam 118 away from the pulley 122 based on rotation of the gear arrangement 118. Hence, the wire 110 is more tensioned compared to a situation where the wire connection element 114 is positioned closer to the pulley 122.

FIG. 10 illustrates an example of the variable display tensioner system 100 and the display module in a partially open position, according to an embodiment of the disclosure. Compared to the situation in FIG. 9, the movable frame 108 has moved towards an opening position, and may be in an approximately half-opened position. The gear arrangement 116 may have caused the cam 118 to rotate such that the nose of the cam 118 may be facing away from the wire connection element 114. The gear arrangement 116 may be designed such that the cam 118 is caused to rotate a half spin when the movable frame 108 is moved from the closed position to the half-opened position. Further, the gear arrangement 116 may be designed such that the cam 118 is caused to rotate a full spin when the movable frame 108 is moved from the closed position to an open position.

In the partially opened position, the movable end 140 of the extendable display 104 may have moved away from the pulley 122 towards a bend area of the extendable display 104 located at a rounded edge of the movable frame 108. Hence, the extendable display 104 may be configured to roll over the rounded edge and to extend an area of the extendable display 104 located on opposite side of the movable frame 108 compared to the side where the movable end 140 is located.

In addition, the wire connection element 114 may have moved towards the pulley 122. For example, the wire connection element 114 may be configured to be in contact with the surface of the cam 118, and a profile of the cam 118 may be selected such that a distance between the wire connection element 114 and a pivot axis of the cam 118 changes when the cam 118 rotates. The distance may be greater in closed and open positions and shorter when the movable frame 108 is in a partially open position. With a shorter distance between the wire connection element 114 and the cam 118, the wire 110 may be less tensioned. By changing the position of the wire connection element 114 during movement of the extendable display 104 and the movable frame 108, a length of the wire may be changed based on the changes in the tension of the wire, which may further provide variable tensioning of the extendable device 104.

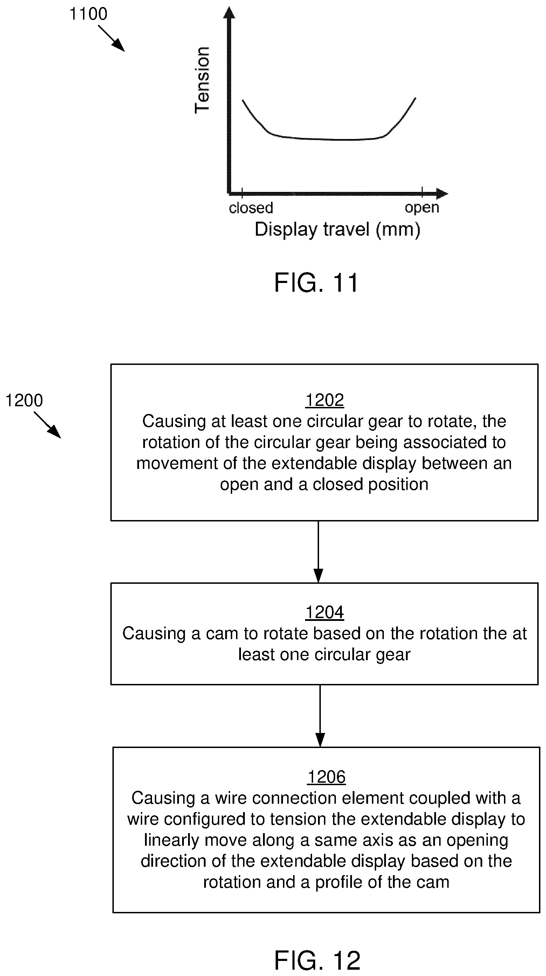

FIG. 11 illustrates an example graph 1100 of variable tension provided by a variable display tensioner system, according to an embodiment of the disclosure. One example of a variable display tensioner system is the variable tensioner system 100. The variable tension may be provided a flexible display configured to extend based on movement of the display. For example, the extendable display 104 of the portable electrical device 102 is one example of a flexible display configured to extend. The tension of extendable display 104 may be configured to change during the open/close cycle of the moving parts of the portable electrical device 102, such as the movable frame 108 and the extendable display 104. The linear movement of the movable frame 108 towards opening and closing direction may be linked to movement of the wire connection element 114 via the gear arrangement 116 and the cam 118 of the variable display tensioner system 100.

The graph 1100 shows one example, wherein the tension first decreases when extendable display travels from the closed position towards the open position. Depending on the profile of the cam and design of the gear arrangement, the tension may decrease until the movable frame is at least partially opened and the tension may stay at some decreased level until the movable frame has moved closer to the open position. When the movable frame has passed a certain travel distance towards the open position, the tension may be configured to start increasing until it may reach the initial tension level when the movable frame is at the open position. Alternative, the tension may be configured to decrease substantially a first half of the opening cycle and increase substantially a second half of the opening cycle. The opening cycle comprises the travel from the closed position to the open position. The increase in tension may start when the cam has rotated such that a nose of the cam starts to push the wire connection element away from a pivot axis of the cam. Similarly, the decease in tension may start when the nose of the cam rotates away from the wire connection element, and the wire connection element is allowed to move towards the pivot axis of the cam. The wire connection element may comprise a spring or it may comprise other means configured to compress the wire connection element such that it is constantly pushed towards the cam, and the profile of the cam may dictate the position/compression stage of the wire connection element. The cam may have a symmetrical profile with a variable distance between a surface of the cam and a pivot axis of the cam. A cam having a nose and a heel is one example of such cam.

FIG. 12 illustrates an example of a method 1200 for providing variable tensioning of an extendable display of a portable electrical device, according to an embodiment of the disclosure. The method may be implemented, for example, with the variable display tensioner system 100.

At 1202, the method may comprise causing at least one circular gear to rotate, the rotation of the circular gear being associated to movement of the extendable display between an open and a closed position.

At 1204, the method may comprise causing a cam to rotate based on the rotation the at least one circular gear.

At 1206, the method may comprise causing a wire connection element coupled with a wire configured to tension the extendable display to linearly move along a same axis as an opening direction of the extendable display based on the rotation and a profile of the cam.

Further features of the methods directly result from the functionalities and parameters of the methods and devices, for example the variable display tensioner system 100, as described in the appended claims and throughout the specification and are therefore not repeated here.

A device or a system may be configured to perform or cause performance of any aspect of the method(s) described herein. Further, a computer program may comprise program code configured to cause performance of an aspect of the method(s) described herein, when the computer program is executed on a computer. Further, the computer program product may comprise a computer readable storage medium storing program code thereon, the program code comprising instruction for performing any aspect of the method(s) described herein. Further, a device may comprise means for performing any aspect of the method(s) described herein. According to an example embodiment, the means comprises at least one processor, and at least one memory including program code, the at least one processor, and program code configured to, when executed by the at least one processor, cause performance of any aspect of the method(s). For example, the motor 132 may be configured to be operated by a computer to cause the first circular gear to rotate.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

Various modification of those examples are possible without departing from the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. Furthermore, references to 'at least one' item or 'one or more' items may refer to one or a plurality of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or device may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A variable display tensioner system (100) for a portable electrical device (102) with an extendable display (104), comprising:
a gear arrangement (116) comprising at least one circular gear (124) configured to at least one of cause the extendable display (104) to move between an open and a closed position based on rotation of the circular gear (124) or rotate based on the movement of the extendable display (104) between the open and the closed position;
a wire connection element (114) configured to be coupled with a wire (110) configured to tension the extendable display;
the system being **characterised by**
a cam (118) configured to rotate when the at least one circular gear (124) rotates, and wherein the rotation of the cam (118) is configured to cause linear movement of the wire connection element (114) along a same axis as an opening direction of the extendable display (104) based on a profile of the cam (118).

2. The variable display tensioner system (100) of claim 1, wherein the at
least one circular gear (124) is configured to cause linear movement of a first frame (108) of the portable electrical device (102) in relation to a second frame (106) of the portable electrical device (102) based on the rotation of the circular gear (124) or to rotate based on the linear movement of the first frame (106), wherein the linear movement of the first frame (108) is configured to cause the movement of the extendable display (104) between the open and the closed direction; and wherein
the wire connection element (114) is configured to be movably coupled with the second frame (106); and
the gear arrangement (116) and the cam (118) are configured to be fixedly coupled with the second frame (106).

3. The variable display tensioner system (100) of claim 2,
further comprising at least one linear gear (120) configured to be coupled with the first frame (108) and configured to engage with first the circular gear (124).

4. The variable display tensioner system (100) of any preceding claim,
wherein the cam (118) is configured to rotate substantially a full rotation around its pivot axis when the extendable display (104) moves from the closed position to the open position.

5. The variable display tensioner system (100) of any preceding claim,
wherein the cam (118) is configured to push the wire connection element (114) towards the opening direction of the extendable display (104) when the extendable display (104) is substantially in the open position or in the closed position and to cause the wire connection element (114) to move towards a closing direction of the extendable display (104) when the extendable display (104) is substantially positioned between the open and the closed position based on the profile of the cam (118).

6. The variable display tensioner system (100) of any preceding claim,
wherein the cam (118) has a symmetrical profile having a nose and a heel.

7. The variable display tensioner system (100) of any preceding claim,
wherein the wire connection element (114) comprises at least one spring (112) configured to push the wire connection element (114) to be in contact with the cam (118).

8. The variable display tensioner system (100) of any preceding claim,
wherein the at least one circular gear (124) and the cam (118) are coupled to a same axis.

9. The variable display tensioner system (100) of any of claim 1 to 7,
wherein the gear arrangement (116) comprises:
a first circular gear (124) configured to rotate based on the movement of the extendable display (104) or to cause the movement of the extendable display based on rotation of the first circular gear (124);
a second circular gear (126) configured to rotate simultaneously with the first circular gear (124) on a same axis;
a third circular gear (128) engaging with the second circular gear (126) on a parallel axis and configured to rotate to an opposite direction at a reduced speed compared to the first circular gear (124) based on the rotation of the second circular gear (126); and wherein
the cam (118) is coupled with the third circular gear (128) via a gear shaft (130) and configured to rotate at the reduced rotation speed based on the rotation of the third circular gear (128).

10. The variable display tensioner system (100) of any preceding claim,
further comprising:
a motor (132) configured to cause rotation of the at least one circular gear (124).

11. The variable display tensioner system (100) of claim 10, wherein the
motor (132) is configured to be fixed to the second frame (106) linearly to an opening direction of the extendable display (104); and the variable display tensioner system (100) further comprises:
a lead screw (134) configured to be rotated by the motor (132);
a nut (136) configured to be coupled with the second frame (106) and to move linearly along the lead screw (134) based on rotation of the lead screw (134), wherein movement of the nut (136) is configured to cause linear movement of a first frame (108) of the portable electrical device (102) relative to a second frame (106) of the portable electrical device (102) to move the extendable display (104) between the open and the closed position.

12. The variable display tensioner system (100) of any preceding claim,
wherein the variable display tensioner system (100) comprises the wire (110), and wherein the wire (110) is configured to be coupled with a movable end (140) of the extendable display (104).

13. The variable display tensioner system (100) of any preceding claim,
comprising a pulley (122) configured to be coupled with the first frame (108) and to tension the wire (110) between the wire connection element (114) and a movable end (140) of the extendable display (104).

14. A portable electrical device (102), comprising:
an extendable display (104); and
one or more variable display tensioner systems (100) according to any of claim 1 to 13.

15. A method (1200) for providing variable tensioning of an extendable
display of a portable electrical device, the method comprising:
causing (1202) at least one circular gear to rotate, the rotation of the circular gear being associated to movement of the extendable display between an open and a closed position;
causing (1204) a cam to rotate based on the rotation of the at least one circular gear; and
causing (1206) a wire connection element coupled with a wire configured to tension the extendable display to linearly move along a same axis as an opening direction of the extendable display based on the rotation and a profile of the cam.

## Patentansprüche

1. Variables Display-Spannsystem (100) für eine tragbare elektrische Vorrichtung (102) mit einem ausziehbaren Display (104), umfassend:
eine Getriebeanordnung (116), umfassend mindestens ein kreisförmigen Zahnrad (124), das konfiguriert ist, um zumindest eines der folgenden zu bewirken: eine Bewegung des ausziehbaren Displays (104) zwischen einer offenen und einer geschlossenen Position basierend auf einer Drehung des kreisförmigen Zahnrads (124) oder eine Drehung basierend auf der Bewegung des ausziehbaren Displays (104) zwischen der offenen und der geschlossenen Position;
ein Drahtverbindungselement (114), das so konfiguriert ist, um mit einem Draht (110) gekoppelt zu werden, der konfiguriert ist, um das ausziehbare Display zu spannen;
wobei das System **gekennzeichnet ist durch**
eine Nocke (118), die konfiguriert ist, um sich zu drehen, wenn sich das mindestens eine kreisförmige Zahnrad (124) dreht, und
wobei die Drehung der Nocke (118) konfiguriert ist, um eine lineare Bewegung des Drahtverbindungselements (114) entlang einer gleichen Achse wie eine Öffnungsrichtung des ausziehbaren Displays (104) basierend auf einem Profil der Nocke (118) zu bewirken.

2. Variables Display-Spannsystem (100) nach Anspruch 1, wobei das
mindestens eine kreisförmige Zahnrad (124) konfiguriert ist, um eine lineare Bewegung eines ersten Rahmens (108) der tragbaren elektrischen Vorrichtung (102) relativ zu einem zweiten Rahmen (106) der tragbaren elektrischen Vorrichtung (102) basierend auf der Drehung des kreisförmigen Zahnrads (124) zu bewirken, oder sich basierend auf der linearen Bewegung des ersten Rahmens (106) zu drehen, wobei die lineare Bewegung des ersten Rahmens (108) konfiguriert ist, um die Bewegung des ausziehbaren Displays (104) zwischen der offenen und der geschlossenen Position zu bewirken; und wobei
das Drahtverbindungselement (114) konfiguriert ist, um beweglich mit dem zweiten Rahmen (106) gekoppelt zu werden; und
die Getriebeanordnung (116) und die Nocke (118) konfiguriert sind, um fest mit dem zweiten Rahmen (106) gekoppelt zu werden.

3. Variables Display-Spannsystem (100) nach Anspruch 2,
ferner umfassend mindestens ein lineares Zahnrad (120), das konfiguriert ist, um mit dem ersten Rahmen (108) gekoppelt zu werden, und konfiguriert ist, um mit dem ersten kreisförmigen Zahnrad (124) in Eingriff zu stehen.

4. Variables Display-Spannsystem (100) nach einem der vorhergehenden Ansprüche,
wobei die Nocke (118) konfiguriert ist, um sich im Wesentlichen eine vollständige Umdrehung um ihre Drehachse zu drehen, wenn sich das ausziehbare Display (104) von der geschlossenen Position in die offene Position bewegt.

5. Variables Display-Spannsystem (100) nach einem der vorhergehenden Ansprüche,
wobei die Nocke (118) konfiguriert ist, um das Drahtverbindungselement (114) in Richtung der Öffnungsrichtung des ausziehbaren Displays (104) zu drücken, wenn sich das ausziehbare Display (104) im Wesentlichen in der offenen Position oder in der geschlossenen Position befindet, und um eine Bewegung des Drahtverbindungselements (114) in Richtung einer Schließrichtung des ausziehbaren Displays (104) zu bewirken, wenn sich das ausziehbare Display (104) im Wesentlichen zwischen der offenen und der geschlossenen Position befindet, basierend auf dem Profil der Nocke (118).

6. Variables Display-Spannsystem (100) nach einem der vorhergehenden Ansprüche,
wobei die Nocke (118) ein symmetrisches Profil aufweist, das eine Nase und eine Ferse aufweist.

7. Variables Display-Spannsystem (100) nach einem der vorhergehenden Ansprüche,
wobei das Drahtverbindungselement (114) mindestens eine Feder (112) umfasst, die konfiguriert ist, um das Drahtverbindungselement (114) drückt, um mit der Nocke (118) in Kontakt zu stehen.

8. Variables Display-Spannsystem (100) nach einem der vorhergehenden Ansprüche,
wobei das mindestens eine kreisförmige Zahnrad (124) und die Nocke (118) an einer gleichen Achse gekoppelt sind.

9. Variables Display-Spannsystem (100) nach einem der Ansprüche 1 bis 7,
wobei die Getriebeanordnung (116) Folgendes umfasst:
ein erstes kreisförmiges Zahnrad (124), das konfiguriert ist, um sich basierend auf der Bewegung des ausziehbaren Displays (104) zu drehen oder die Bewegung des ausziehbaren Displays basierend auf einer Drehung des ersten kreisförmigen Zahnrads (124) zu bewirken;
ein zweites kreisförmiges Zahnrad (126), das konfiguriert ist, um sich gleichzeitig mit dem ersten kreisförmigen Zahnrad (124) an einer gleichen Achse zu drehen;
ein drittes kreisförmiges Zahnrad (128), das mit dem zweiten kreisförmigen Zahnrad (126) an einer parallelen Achse in Eingriff steht und konfiguriert ist, um sich basierend auf der Drehung des zweiten kreisförmigen Zahnrads (126) mit reduzierter Drehzahl in einer entgegengesetzten Richtung relativ zu dem ersten kreisförmigen Zahnrad (124) zu drehen; und wobei
die Nocke (118) über eine Zahnradwelle (130) mit dem dritten kreisförmigen Zahnrad (128) gekoppelt ist und konfiguriert ist, um sich mit der reduzierten Drehzahl basierend auf der Drehung des dritten kreisförmigen Zahnrads (128) zu drehen.

10. Variables Display-Spannsystem (100) nach einem der vorhergehenden Ansprüche,
ferner umfassend:
einen Motor (132), der konfiguriert ist, um eine Drehung des mindestens einen kreisförmigen Zahnrads (124) zu bewirken.

11. Variables Display-Spannsystem (100) nach Anspruch 10, wobei der
Motor (132) konfiguriert ist, um linear zu einer Öffnungsrichtung des ausziehbaren Displays (104) an dem zweiten Rahmen (106) befestigt zu sein; und wobei das variable Display-Spannsystem (100) ferner umfasst:
eine Gewindespindel (134), die konfiguriert ist, um von dem Motor (132) gedreht zu werden;
eine Mutter (136), die konfiguriert ist, um mit dem zweiten Rahmen (106) gekoppelt zu werden und sich basierend auf einer Drehung der Gewindespindel (134) linear entlang der Gewindespindel (134) zu bewegen, wobei die Bewegung der Mutter (136) konfiguriert ist, um eine lineare Bewegung eines ersten Rahmens (108) der tragbaren elektrischen Vorrichtung (102) relativ zu einem zweiten Rahmen (106) der tragbaren elektrischen Vorrichtung (102) zu bewirken, um das ausziehbare Display (104) zwischen der offenen und der geschlossenen Position zu bewegen.

12. Variables Display-Spannsystem (100) nach einem der vorhergehenden Ansprüche,
wobei das variable Display-Spannsystem (100) den Draht (110) umfasst und wobei der Draht (110) konfiguriert ist, um mit einem beweglichen Ende (140) des ausziehbaren Displays (104) gekoppelt zu werden.

13. Variables Display-Spannsystem (100) nach einem der vorhergehenden Ansprüche,
umfassend eine Umlenkrolle (122), die konfiguriert ist, um mit dem ersten Rahmen (108) gekoppelt zu werden und um den Draht (110) zwischen dem Drahtverbindungselement (114) und einem beweglichen Ende (140) des ausziehbaren Displays (104) zu spannen.

14. Tragbare elektrische Vorrichtung (102), umfassend:
ein ausziehbares Display (104); und
ein oder mehrere variable Display-Spannsysteme (100) nach einem der Ansprüche 1 bis 13.

15. Verfahren (1200) zum Bereitstellen einer variablen Spannung eines ausziehbaren
Displays einer tragbaren elektrischen Vorrichtung, wobei das Verfahren Folgendes umfasst:
Bewirken (1202), dass sich mindestens ein kreisförmiges Zahnrad dreht, wobei die Drehung des kreisförmigen Zahnrads mit einer Bewegung des ausziehbaren Displays zwischen einer offenen und einer geschlossenen Position verknüpft ist;
Bewirken (1204), dass sich eine Nocke basierend auf der Drehung des mindestens einen kreisförmigen Zahnrads dreht; und
Bewirken (1206), dass sich ein Drahtverbindungselement, das mit einem Draht gekoppelt ist, der konfiguriert ist, um das ausziehbare Display zu spannen, entlang einer gleichen Achse wie eine Öffnungsrichtung des ausziehbaren Displays basierend auf der Drehung und einem Profil der Nocke linear bewegt.

## Revendications

1. Système de tendeur d'écran variable (100) pour un dispositif électrique portable (102) avec un écran extensible (104), comprenant :
un agencement d'engrenages (116) comprenant au moins un engrenage circulaire (124) configuré pour au moins l'une des actions suivantes : provoquer le déplacement de l'écran extensible (104) entre une position ouverte et fermée sur la base de la rotation de l'engrenage circulaire (124) ou à tourner sur la base du déplacement de l'écran extensible (104) entre la position ouverte et fermée ;
un élément de connexion de fil (114) configuré pour être couplé à un fil (110) configuré pour tendre l'écran extensible ;
le système étant **caractérisé par**
une came (118) configurée pour tourner lorsque l'au moins un engrenage circulaire (124) tourne, et dans lequel la rotation de la came (118) est configurée pour provoquer le déplacement linéaire de l'élément de connexion de fil (114) le long d'un même axe qu'une direction d'ouverture de l'écran extensible (104) sur la base d'un profil de la came (118).

2. Système de tendeur d'écran variable (100) selon la revendication 1, dans lequel
l'au moins un engrenage circulaire (124) est configuré pour provoquer le déplacement linéaire d'un premier cadre (108) du dispositif électrique portable (102) par rapport à un second cadre (106) du dispositif électrique portable (102) sur la base de la rotation de l'engrenage circulaire (124) ou pour tourner sur la base du déplacement linéaire du premier cadre (106), dans lequel le déplacement linéaire du premier cadre (108) est configuré pour provoquer le déplacement de l'écran extensible (104) entre la direction ouverte et fermée ; et dans lequel
l'élément de connexion de fil (114) est configuré pour être couplé de manière mobile avec le second cadre (106) ; et
l'agencement d'engrenages (116) et la came (118) sont configurés pour être couplés de manière fixe avec le second cadre (106).

3. Système de tendeur d'écran variable (100) selon la revendication 2,
comprenant en outre au moins un engrenage linéaire (120) configuré pour être couplé au premier cadre (108) et configuré pour venir en prise avec le premier engrenage circulaire (124).

4. Système de tendeur d'écran variable (100) selon une quelconque revendication précédente,
dans lequel la came (118) est configurée pour effectuer une rotation sensiblement complète autour de son axe de pivotement lorsque l'écran extensible (104) se déplace de la position fermée à la position ouverte.

5. Système de tendeur d'écran variable (100) selon une quelconque revendication précédente,
dans lequel la came (118) est configurée pour pousser l'élément de connexion de fil (114) vers la direction d'ouverture de l'écran extensible (104) lorsque l'écran extensible (104) est sensiblement dans la position ouverte ou dans la position fermée et pour provoquer le déplacement de l'élément de connexion de fil (114) vers une direction de fermeture de l'écran extensible (104) lorsque l'écran extensible (104) est sensiblement positionné entre la position ouverte et fermée sur la base du profil de la came (118).

6. Système de tendeur d'écran variable (100) selon une quelconque revendication précédente,
dans lequel la came (118) a un profil symétrique ayant un nez et un talon.

7. Système de tendeur d'écran variable (100) selon une quelconque revendication précédente,
dans lequel l'élément de connexion de fil (114) comprend au moins un ressort (112) configuré pour pousser l'élément de connexion de fil (114) de manière à le maintenir en contact avec la came (118).

8. Système de tendeur d'écran variable (100) selon une quelconque revendication précédente,
dans lequel l'au moins un engrenage circulaire (124) et la came (118) sont couplés à un même axe.

9. Système de tendeur d'écran variable (100) selon l'une quelconque de la revendication 1 à 7,
dans lequel l'agencement d'engrenages (116) comprend :
un premier engrenage circulaire (124) configuré pour tourner sur la base du déplacement de l'écran extensible (104) ou pour provoquer le déplacement de l'écran extensible sur la base de la rotation du premier engrenage circulaire (124) ;
un deuxième engrenage circulaire (126) configuré pour tourner simultanément avec le premier engrenage circulaire (124) sur un même axe ;
un troisième engrenage circulaire (128) venant en prise avec le deuxième engrenage circulaire (126) sur un axe parallèle et configuré pour tourner dans une direction opposée à une vitesse réduite par rapport au premier engrenage circulaire (124), sur la base de la rotation du deuxième engrenage circulaire (126) ;
et dans lequel
la came (118) est couplée au troisième engrenage circulaire (128) via un arbre d'engrenage (130) et configurée pour tourner à la vitesse de rotation réduite sur la base de la rotation du troisième engrenage circulaire (128).

10. Système de tendeur d'écran variable (100) selon une quelconque revendication précédente,
comprenant en outre :
un moteur (132) configuré pour provoquer la rotation de l'au moins un engrenage circulaire (124).

11. Système de tendeur d'écran variable (100) selon la revendication 10, dans lequel
le moteur (132) est configuré pour être fixé au second cadre (106) linéairement dans une direction d'ouverture de l'écran extensible (104) ; et le système de tendeur d'écran variable (100) comprend en outre :
une vis-mère (134) configurée pour être tournée par le moteur (132) ;
un écrou (136) configuré pour être couplé au second cadre (106) et pour se déplacer linéairement le long de la vis-mère (134) sur la base de la rotation de la vis-mère (134), dans lequel le déplacement de l'écrou (136) est configuré pour provoquer le déplacement linéaire d'un premier cadre (108) du dispositif électrique portable (102) par rapport à un second cadre (106) du dispositif électrique portable (102) pour déplacer l'écran extensible (104) entre la position ouverte et fermée.

12. Système de tendeur d'écran variable (100) selon une quelconque revendication précédente,
dans lequel le système de tendeur d'écran variable (100) comprend le fil (110), et dans lequel le fil (110) est configuré pour être couplé à une extrémité mobile (140) de l'écran extensible (104).

13. Système de tendeur d'écran variable (100) selon une quelconque revendication précédente,
comprenant une poulie (122) configurée pour être couplée au premier cadre (108) et pour tendre le fil (110) entre l'élément de connexion de fil (114) et une extrémité mobile (140) de l'écran extensible (104).

14. Dispositif électrique portable (102), comprenant :
un écran extensible (104) ; et
un ou plusieurs systèmes de tendeur d'écran variable (100) selon l'une quelconque des revendications 1 à 13.

15. Procédé (1200) de mise en tension variable d'un écran extensible
d'un dispositif électrique portable, le procédé comprenant :
le fait de provoquer (1202) la rotation d'au moins un engrenage circulaire, la rotation de l'engrenage circulaire étant associée au déplacement de l'écran extensible entre une position ouverte et fermée ;
le fait de provoquer (1204) la rotation d'une came sur la base de la rotation de l'au moins un engrenage circulaire ; et
le fait de provoquer (1206) le déplacement linéaire d'un élément de connexion de fil, couplé à un fil configuré pour tendre l'écran extensible, le long d'un même axe qu'une direction d'ouverture de l'écran extensible sur la base de la rotation et d'un profil de la came.
